# EUROPEAN PATENT APPLICATION

(11) **EP 1 897 791 A2**
(43) Date of publication of application: **12.03.2008**
(21) Application number: 07253471.2
(22) Date of filing: 01.09.2007
(51) Int. Cl.: B62D 55/205

(54) **Track link**

(30) Priority: 05.09.2006 GB 0617508
(71) Applicant: William Clark & Son (Parkgate) Limited, 123 Irish Street Dumfries DG1 2PE (GB)
(72) Inventor: Clark, William Douglas, Dumfries DG1 3NB (GB); Sellar, Dawson, Kirkcudbright DG6 4QP (GB)
(74) Representative: Newell, Campbell

(57) **Abstract**

A variable length track link (20) suitable for use in a bogie track has two link members (22, 24) and a releasable clamping means (44, 46). Each link member (22, 24) comprises a link pin (12), for coupling to a bogie track plate (4), and a transverse member (26, 28) attached, at least in use, to the link pin (12). The transverse members (26, 28) have engagement portions (34) with an engagement surfaces (36). The engagement surfaces (36) of the link members (26, 28) are formed and arranged for locking interengagement with each other when clamped together by the clamping means (44, 46), so as to hold the link pins (12) parallel and spaced apart at a selected distance. The distance is variable according to operational requirements by releasing the clamping means (44, 46) and moving the engagement surfaces (36) relative to each other and refastening the clamping means (44, 46).

## Description

The present invention relates to a link, for use in joining and tensioning bogie or band tracks or single wheel tracks, which has a variable pitch or length.

Bogie or 'band' tracks are endless tracks which are fitted around pairs of tyres of a wheeled vehicle so as to convert it into a tracked vehicle. Bogie tracks find use particularly in vehicles that are used on rough or soft terrain, for example vehicles used in forestry operations.

Such vehicles have pairs of driven wheels mounted on bogie arrangements. The axles are mounted at a constant distance apart i.e. the wheels do not have independent suspension, suspension is provided by movement of the bogie relative to the rest of the vehicle.

A typical bogie track consists of a series of elongate track plates side-by-side and linked together to form an endless track. The track plates have an inner profile or shape which grips tyres when the track is properly tensioned. The track can also be kept in position by the provision of projections or 'side paws' at the ends of the track plates which locate onto the side walls of the tyres as the track passes round them. The outer profile of the track plates is shaped to grip the ground and may include projections or spikes for additional traction. Each track plate is usually provided with a loop or link (an 'end link') at or near each end. The track plates are linked together by means of connecting links which connect between the end links of adjacent track plates. This provides a flexible track. Bogie tracks are fitted to already assembled bogies and wheels. Therefore they are not supplied, for fitting, as an endless track but as a length of track which is fitted round the tyres of a bogie. The ends of the track are then pulled close together with a tensioning tool and joining links are fitted to connect together the track plate end links at the ends of the track section, to form an endless track.

Even through they are usually made of a hardened steel the components of a bogie track are all subject to wear in use especially at linkages where components move against each other. As the components wear the track loses tension, becoming longer, and it may fall off or cause damage to the vehicle, even when side paws are fitted, unless it is re-tensioned. As the relative positions i.e. the centres of rotation of the tyres, round which the track runs are fixed, tensioning can only be achieved by altering the length of the track itself. This is usually achieved in the first instance by replacing the joining links which connect track ends by shorter links. Indeed in order to provide more scope for adjustment of track tension a single track is often made up of more then one section of track. Each section is joined to the next by openable joining links which can be replaced by shorter links as required. When all of the joining links of a bogie track have been replaced with short links, further adjustment is made by cutting off one or more track plates from the track and then fitting appropriate length joining links to achieve the desired tension.

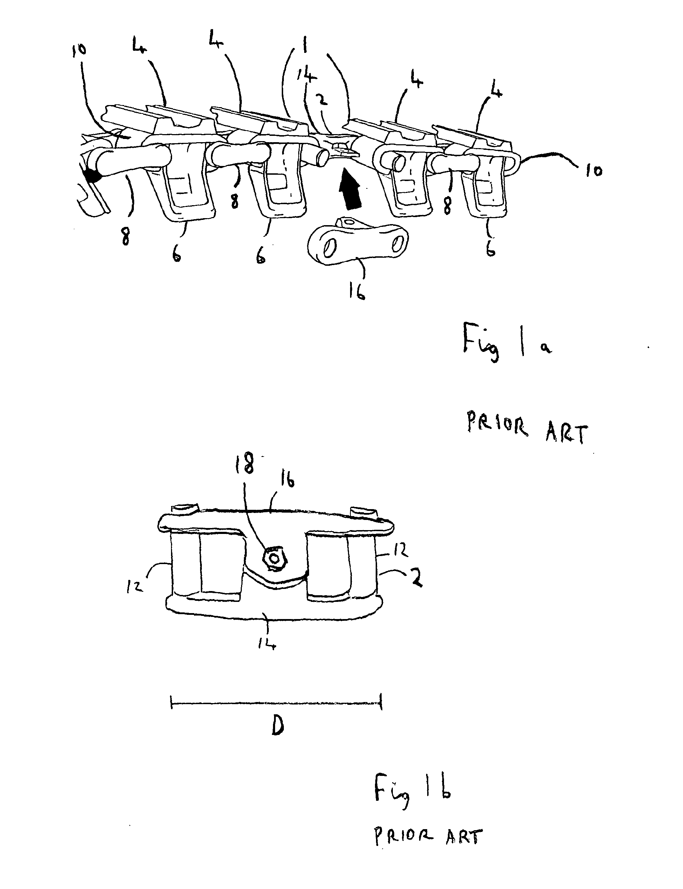

Fig. 1a shows conventionally the joining of track ends 1 at one side of a track with a joining link 2. The track has track plates 4 with side paws 6. The track plates 4 are connected by connecting links 8 fitted through track end links 10. A joining link 2 is shown being fitted (see also Fig. 1b). The joining link 2 has two link pins 12 held parallel and spaced apart by a connecting transverse member 14. After fitting as shown in Fig. 1a an end plate 16 is located onto the ends of the link pins 12 and a bolt 18 is used to secure the closure of the joining link 2. The end plate 16 also acts as another transverse member to strengthen the link in use. Adjustment of track tension is made by replacing the joining link with another where the distance D between the link pins 12 is reduced by having a shorter transverse member 14 and end plate 16.

Whilst using different length joining links provides an effective means of adjusting tension it does suffer from some disadvantages. Different sized joining links must be kept with a machine ready for use. Consequently only two sizes 'short' and 'long' are usually used, limiting the adjustment possible. Furthermore the track ends must be held (by a special track tensioning tool) whilst one joining link is replaced by another.

It is an object of the present invention to provide a joining link for a track that avoids or at least minimises at least one of the aforementioned disadvantages.

Accordingly the present invention provides a variable length track link suitable for use in a bogie track comprising two link members and a releasable clamping means, each link member comprises a link pin, for coupling to a bogie track plate, in use, and a transverse member attached, at least in use, to the link pin and having an engagement portion with an engagement surface, wherein the engagement surfaces of the link members are formed and arranged for locking inter-engagement with each other when clamped together by the clamping means, so as to hold the link pins parallel and spaced apart at a selected distance, the distance being variable according to operational requirements by releasing the clamping means and moving the engagement surfaces relative to each other and refastening the clamping means.

Providing a variable length track link has a number of advantages. Vehicle operators do not have to carry different sized links, ready to adjust track tension, with the vehicle. Furthermore as the links are variable in length adjusting the track tension does not require removal of the link, during which the track must be held in tension by an appropriate tool.

In general the variable length track link should be compact, in order to avoid fouling tyres or body parts of the vehicle as the track runs around the tyres. Therefore it is preferred that the transverse members do not project substantially beyond the ends of the link pins i.e. the engagement portions are located in use between the ends of the link pins.

The variable length track links of the invention can be used in place of conventional connecting links in a bogie track at any point round the track. Preferably the variable length track link is openable i.e. it can be fitted or removed without cutting the link or a track end link to which it is connected. This allows the link to be used as a joining link, for joining track sections together, without welding.

Each transverse member is attached, at least in use, to the corresponding link pin. Thus the transverse member may be a separate component, which attaches to the link pin to form the link member when the variable length track link is being used, as shown hereafter with reference to a specific embodiment. Whilst such arrangements can be satisfactory it is advantageous if the transverse member is permanently attached to the link pin. For example, by welding, or preferably by providing a link member that has the link pin and transverse member together in a single forged unit. A link member that consists of a single component has the benefit of ensuring the correct spatial relationship between the transverse member, especially the engagement surface, and the link pin.

Desireably, where the variable length link is openable the transverse members are attached at or near one end of the link pins. This allows the variable length link to be fitted to a track in the same fashion as shown for the prior art joining link shown in Fig. 1. The link pins have a free end, which is easily passed through the loop of a track plate end link. Where the transverse members are attached at or near an end of the link pins the variable length link further comprises end plates, one for each link pin and releasably attachable to the variable length link. Preferably the end plates are attached to the variable length link by the same clamping means used to clamp the engagement surfaces together. This avoids the complication of additional fasteners being required to hold the end plates in position. More preferably the end plates are formed and arranged to have engagement portions with engagement surfaces formed and arranged for locking inter-engagement with each other when clamped together by the clamping means. This provides the variable length link with greater strength, less likely to move in use from the selected spacing between the link pins when the clamping means is fastened.

The clamping means may for example comprise a bolt and a nut. The bolt may pass through a hole in each engagement surface, and the engagement surfaces are held in locking inter-engagement when the nut is tightened on the end of the bolt until the two engagement surfaces meet together.

Adjustment of the distance between the link pins is made by moving the engagement surfaces of respective transverse members relative to each other. For example, the engagement portions of the transverse members may take the form of substantially flat plates. One surface of the plate on each transverse member is the engagement surface and the engagement surfaces are overlapped and clamped together to hold the link pins at the selected distance. The distance between the link pins is altered by increasing or decreasing the amount of overlap of the engagement surfaces. The arrangement can be effective but has the disadvantage that when the link pins are furthest apart the overlap of the engagement surfaces is reduced to a minimum and so they may be less effective in holding the link pins in the correct position and spacing. Accordingly it is preferred that the engagement surfaces are formed and arranged so that the distance between the link pins is adjusted by rotation of the engagement surfaces relative to each other about a common centre of rotation. This arrangement has the benefit that all of an engagement surface may inter-engage with all of the other, corresponding engagement surface, irrespective of the selected spacing of the link pins. For example the engagement portions of the transverse members may be substantially cylindrical in form with circular engagement surfaces as shown hereinafter with reference to a specific embodiment.

Preferably the length of link is adjusted by relative rotation of the engagement surfaces about the shaft of a bolt of the clamping means. More preferably the variable length link has end plates with engagement portions through which the clamping means bolt passes. Most preferably the engagement portions of the end plates and of the transverse members are clamped together when the clamping means bolt is secured by a nut. This provides a particularly strong and easily adjusted arrangement. A single bolt, parallel to the link pins, passes through the engagement portions of the transverse members and the end plates. Tightening the nut on the bolt secures all the engagement portions and engagement surfaces together.

The engagement surfaces of the transverse members and of the end plates are formed and arranged for locking inter-engagement when clamped. This can be achieved in a number of ways. For example, an engagement surface may have a number of projecting pins which locate into holes of its corresponding engagement surface. Preferably the engagement surfaces are ridged (toothed). When interengaged, ridges of one engagement surface fit into the spaces between the ridges of the corresponding engagement surface. This allows the link to be adjusted in relatively small increments, moving the engagement surfaces by one ridge (tooth) width at a time.

Advantageously when the engagement surfaces are ridged the adjustable link further comprises a resilient biasing member which urges the engagement surfaces together, in use, and the ridges have a profile formed for action as in a ratchet mechanism. For example, where a bolt and nut are used in a clamping means a spring or spring washer at one end of the shaft of the bolt, may act as a biasing means, in compression, urging the engagement surfaces together. When the engagement surfaces are urged together by the biasing means, but not immovably fixed by the tightness of the nut, the ridges of one engagement surface can be forced ('clicked') past the ridges of the corresponding engagement surface in one direction but not in the other as the ridges have a different steepness of shape on one side compared to the other. Preferably the ratchet mechanism is formed to allow the spacing between the link pins to be reduced i.e. the track tension is increased. Tensioning the track can then be more easily accomplished. The nut is released slightly from the fully tight position. The link pins do not move apart under the tension force exerted by the track because the engagement surfaces are held together resiliently by the biasing means. However pulling the link pins towards each other to tighten the track tension can be achieved as the ridges will click past each other when moving in this direction. The nut can then be fully retightened to secure the new selected spacing for the link pins and tension for the track. If on the other hand a reduction in track tension is required the nut is released sufficiently to allow the engagement surfaces to pass each other, without significant contact between the ridges, and then retightened when the desired tension has been achieved.

Alternatively or optionally the variable length link further comprises a resilient biasing member mounted between each pair of engagement surfaces, in use, which urges the engagement surfaces apart. For example, where a bolt and nut are used in a clamping means, a spring or spring washer, mounted on the shaft of the bolt between a pair of engagement surfaces, may act as a biasing means, in expansion. When a pair of engagement surfaces is firmly clamped together by the nut and bolt the biasing means has no effect and the engagement surfaces are in locking inter-engagement. When the clamping means is slackened, by loosening the nut, the biasing means acts to urge the engagement surfaces apart. This is particularly useful when the track and the variable length link have been in use for some time and the engagement surfaces are liable to be stuck ('frozen') together.

Further preferred features and advantages of the present invention will appear from the following detailed description of some embodiments illustrated with reference to the accompanying drawings in which:
Fig. 2a is an exploded perspective view of an embodiment of a variable length link of the invention;
Figs 2b and 2c are perspective views of the embodiment of figure 2a fitted together for use;
Fig. 2d is an elevation of a part of the embodiment of figure 2a;
Fig. 3a is an exploded view of another embodiment of a variable length track link of the invention; and

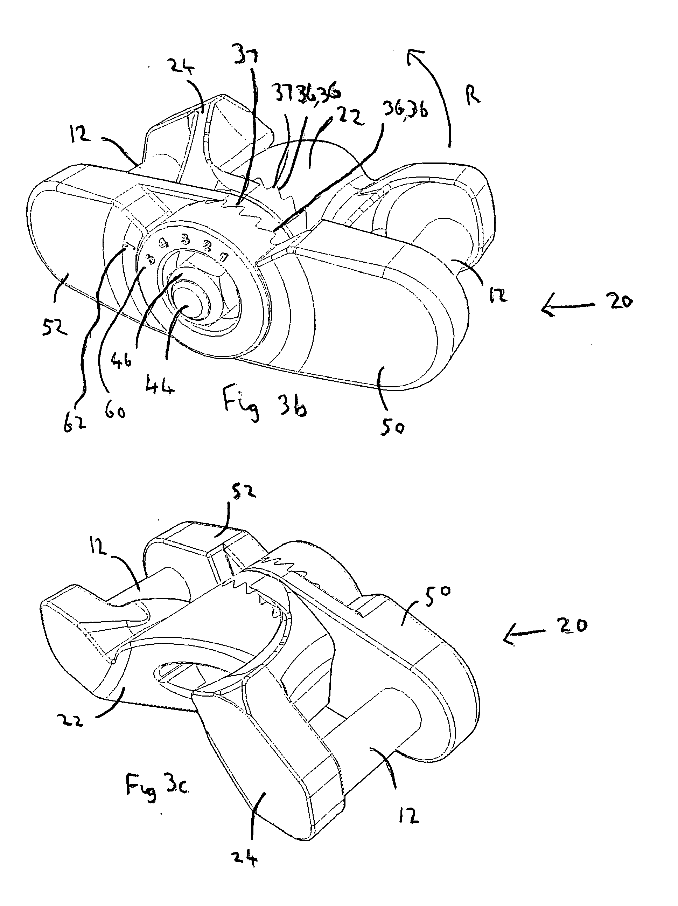

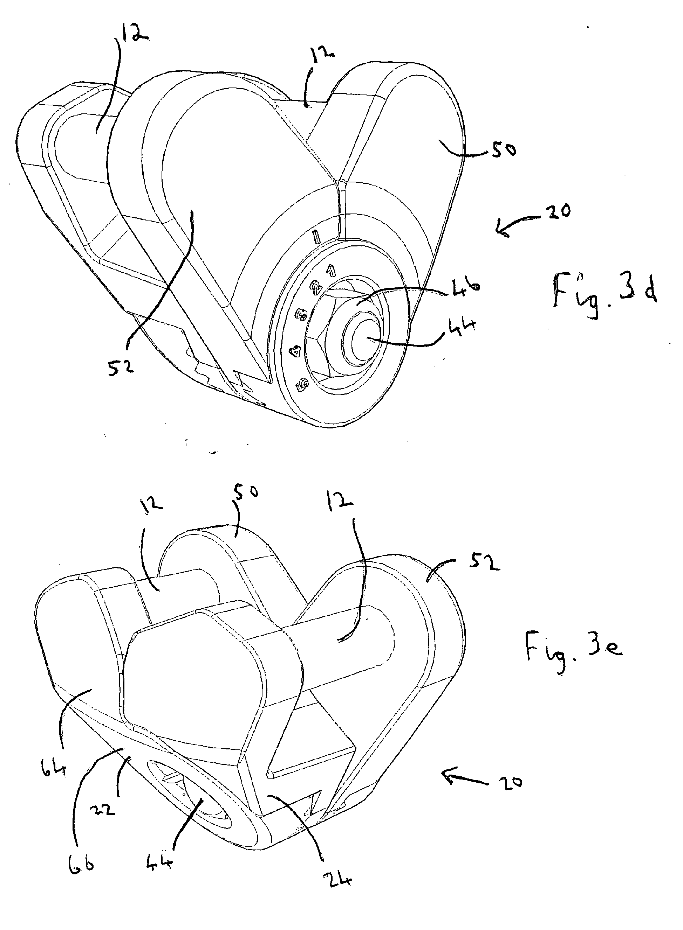

Figs. 3(b-e) are perspective views of the assembled track link of figure 3a.

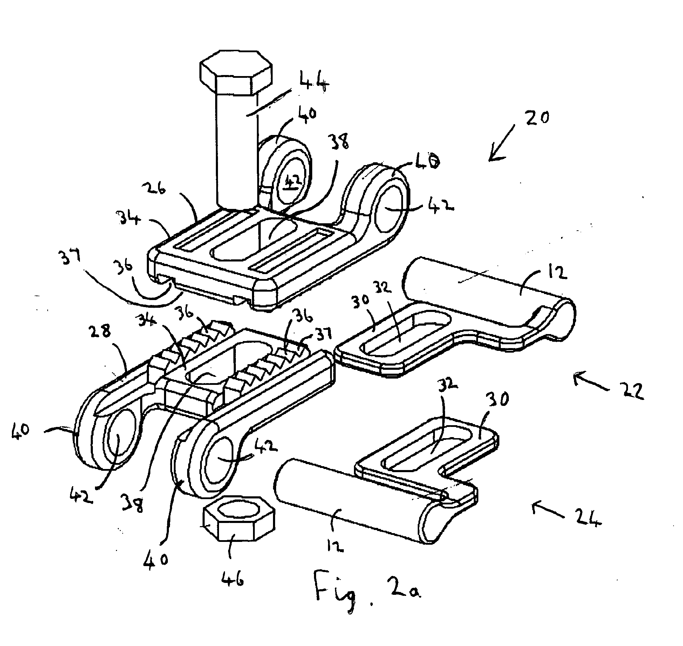

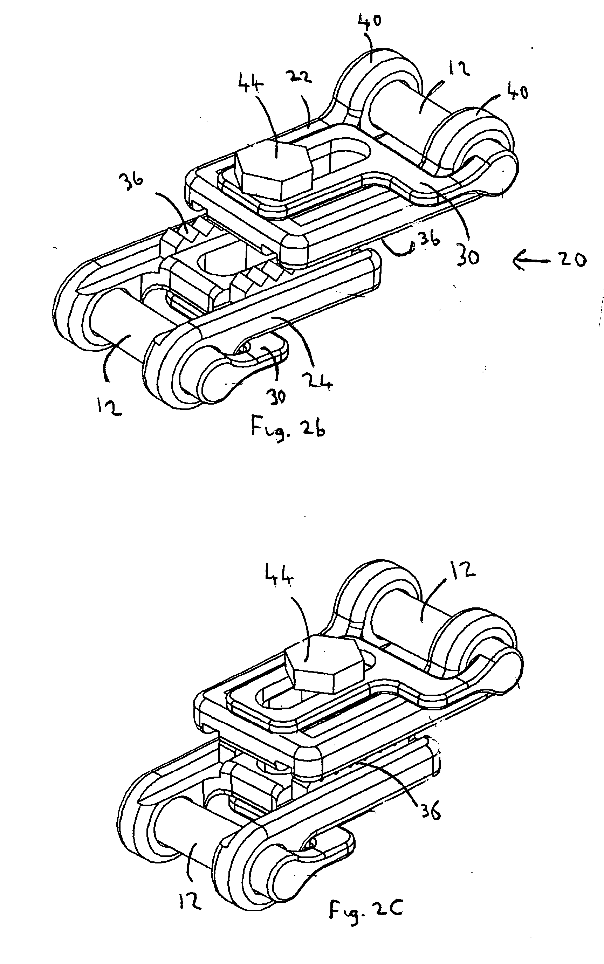

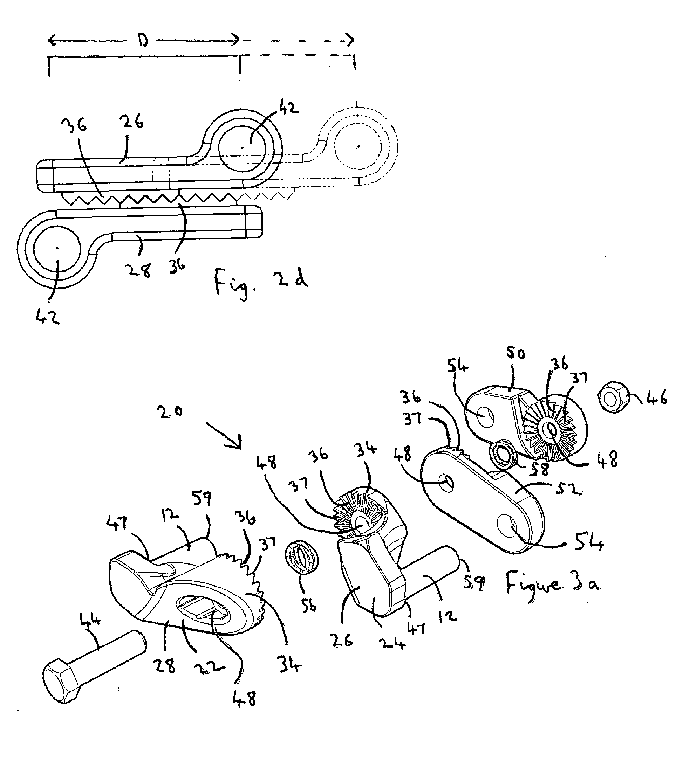

Fig.2a shows in exploded view and embodiment of a variable length track link 20 of the invention. The track link 20 has two link members 22,24 each consisting of a link pin 12 and a separate transverse member 26,28. The link pins 12 each have a flat flange plate 30 attached to one end and projecting transversely from the link pin 12. The flange plates have elongate slots 32 passing through them. The transverse members 26,28 have engagement portions 34 which are substantially flat plates having on their engagement surfaces 36 two toothed or ridged areas 37 on either side of an elongate slot 38 passing through the engagement portions 34. Each transverse member 26,28 also has two projections 40 at one end at right angles to the flat plates of the engagement portions 34, each of which has a bore 42 formed for the close fitting passage of a link pin 12. A bolt 44 and a nut 46 are provided as a clamping means.

In use each link member 22,24 is assembled by passing the link pin 12 through the bores 42. At the same time the elongate slots 32,38 of the flange plates 30 and the engagement portions 34 are placed in alignment. Each link pin 12 also passes through a track end link of a track section being joined (not shown for clarity), which is then held on the link pin 12 between the projections 40 of the transverse member. Assembly is completed by passing the bolt 44 through the elongate slots 32,38 and tightening the nut 46 onto the end of the bolt 44 to give an assembled variable length track link 20 as shown in figure 2b.

Figure 2b shows the variable length track link 20 assembled with the track pins 12 spaced far apart, as the engagement surfaces are only partially overlapped (see figure 2d). Each transverse member 26,28 is attached to its link pin 12 not only by the link pin 12 passing through the bores 42 but also by clamping to the flanges 30 by the action of the bolt 44 and the nut 46 (not visible in this view). At the same time the bolt and nut acts as clamping means holding the engagement surfaces 36 in locking inter-engagement.

Figure 2c shows the same variable length track link 20 but adjusted with a greater overlap of engagement portions 36. This has the effect of reducing the distance between the link pins 12 i.e. to provide an increased tension to a track fitted with the link 20.

Figure 2d shows in elevation the transverse members 26,28 of the track link 20 of figures 2(a to c) in locking inter-engagement. The other components of the link 20 are omitted from this view for clarity. The transverse members 26,28 shown in solid line have a large amount of overlap with each other giving a relatively short horizontal distance D (solid line) between the centres of the bores 42 that accept the link pins 12 in use. Moving the engagement surfaces 36 relative to each other, when the clamping means is not fastened, and then refastening, leads to the position indicated in dashed line where the overlap between the transverse members 26,28 is reduced and the horizontal distance D increased. The distance D can be adjusted incrementally between the limits shown by moving the transverse members 26,28 by a spacing of one ridge 37 of the engagement surface 36 at a time.

Figure 3a shows in exploded view an alternative embodiment of a variable length track link 20 of the invention. The track link 20 has two link members 22,24 each consisting of a hardened steel forging which has a link pin 12 and an transverse member 26,28 each attached to an end 47 of its respective link pin. The transverse members 26,28 have engagement portions 34 which are cylindrical in form with circular engagement surfaces 36. The engagement surfaces 36 have radially disposed ridges or teeth 37, which surround a bore 48 passing through the engagement portion 34. Two end plates 50,52 also have similar circular engagement surfaces 36 with radially disposed ridges 37 and a bore 48 therethrough. They also have blind bores 54 for the acceptance of the free ends 56 of the link pins 12. A bolt 44 and nut 46 are provided as clamping means. Two spring washers 56,58, one between each pair of engagement surfaces 36, are provided as biasing means acting in expansion to urge the engagement surfaces apart.

In use the variable length link 20 is assembled by first passing the bolt 44 through the bores 48 in the link members 22,24 and the spring washer 56 shown between them. The link pins can 12 then be passed through track end links in similar fashion to that shown in figure 1a in respect of a non variable length link. Assembly is then continued by passing the bolt 44 through the bores 48 in the end plates 50,52 and the spring washer 58 between them whilst at the same time locating the blind bores 54 on the free ends 59 of respective link pins 12. The nut 46 is then tightened on the bolt 44 to complete assembly by clamping the component parts together, in particular by clamping each engagement surface 36 in locking inter-engagement with its corresponding facing engagement surface.

The assembled track link 20 is shown, with a long spacing between the link pins 12, in the perspective views of figures 3b and 3c. Figure 3b shows a perspective view from the 'front' of the track link 20, i.e. from the side fitted with the end plates 50,52. Figure 3c shows the link 20 adjusted to the same length as in figure 3b, but viewed from the underside. The end plates 50,52 (figure 3b) are marked, one with a numerical scale 60 the other with an index mark 62. The position of the index mark 62 relative to the numerical scale 60 gives an indication of the spacing between the link pins 12. In the position shown in figures 3b and 3c the link pins 12 are at a maximum distance apart, and the index mark 62 is beside the numeral '5' on the numerical scale 60. To adjust the distance between the link pins 12 the nut 44 is slackened. The spring washers 56 and 58 (figure 3a) urge the pairs of engagement surfaces apart, helping to overcome any 'freezing' of the joint allowing rotation of one link member 22 and its associated end plate 50, about the bolt 44 in the direction shown by the curved arrow R. The engagement surfaces 36 of the transverse members 26,28 thus rotate relative to each other, as do the engagement surfaces 36 of the end plates 50,52. Once the desired change in distance between the link pins 12 is achieved the nut 46 is retightened to secure the engagement surfaces together again.

The ridges 37 of the engagement surfaces 36 in this example are shown (figure 3b) with a profile that is suitable for ratchet action, allowing the distance between the link pins 12 to be reduced but not increased when the engagement surfaces are resiliently held together by a suitable biasing means as described earlier. This can be achieved for example, by fitting a spring or spring washer (not shown) between the nut 46 and the end plate 50, acting to compress the engagement surfaces 36 together even when the nut is slightly slackened.

Figures 3d and 3e show in perspective views the variable length link 20 when the distance between the link pins has been reduced to the minimum. (The index mark 62 is beside the numeral '1' on the numerical scale 60.) The rear view of figure 3e shows that the link 20 has, when at or near this position, a rear face 64 which is profiled with a slope 66. In use, when the link 20 joins a bogie track with each of the link pins 12 connected to a track end link, this profile allows the variable length link 20 to conform to the sidewall of tyres, without fouling them, in a similar fashion to the sidepaws 6 shown in figure 1a.

## Claims

1. A variable length track link (20) suitable for use in a bogie track comprising two link members (22, 24) and a releasable clamping means (44, 46), each link member (22, 24) comprising a link pin (12), for coupling to a bogie track plate (4), in use, and a transverse member (26, 28) attached, at least in use, to the link pin (12) and having an engagement portion (34) with an engagement surface (36), wherein the engagement surfaces (36) of the link members (22, 24) are formed and arranged for locking inter-engagement with each other when clamped together by the clamping means (44, 46), so as to hold the link pins (12) parallel and spaced apart at a selected distance, the distance being variable according to operational requirements by releasing the clamping means (44, 46) and moving the engagement surfaces (36) relative to each other and refastening the clamping means (44, 46).

2. A variable length track link (20) according to claim 1 wherein the said link (20) is openable so as to allow the link to be used as a joining link, for joining track sections (4) together, without welding.

3. A variable length track link (20) according to claim 2 wherein the transverse members (26, 28) are attached at or near an end (47) of the link pins (12) and said variable length track link further comprises end plates (50, 52), one for each link pin (12) and releasably attachable to the variable length track link.

4. A variable length track link (20) according to claim 3 wherein the end plates (50, 52) are attachable to the variable length track link by the same clamping means (44, 46) used to clamp the engagement surfaces (36) of the transverse members (26, 28) together.

5. A variable length track link (20) according to claim 4 wherein the end plates (50, 52) are formed and arranged to have end plate engagement portions with engagement surfaces (36) formed and arranged for locking inter-engagement with each other when clamped together by the clamping means (44, 46).

6. A variable length track link according to any proceeding claim wherein the engagement surfaces (36) of the transverse members (26, 28) are formed and arranged so that the distance between the link pins (12) is adjusted by rotation of the engagement surfaces (36) relative to each other about a common centre of rotation

7. A variable length track link (20) according to claim 6 wherein the distance between the link pins (12) is adjusted by relative rotation of the engagement surfaces (36) of the transverse members (26, 28) about the shaft of a bolt (44) of the clamping means (44, 46) and the variable length link (20) has end plates (50, 52) with engagement portions through which the clamping means bolt (44) passes.

8. A variable length track link (20) according to any proceeding claim wherein the engagement surfaces (36) of the transverse members (26, 28) and of the end plates (50, 52), where fitted, are ridged (37).

9. A variable length track link (20) according to claim 8 wherein the track link (20) further comprises a resilient biasing member which urges the engagement surfaces together (36) in use, and the ridges (37) have a profile formed for action as in a ratchet mechanism.

10. A variable length track link (20) according to any proceeding claim further comprising resilient biasing members (56, 58) mounted between each pair of transverse member (26, 28) engagement surfaces (36) and between each pair of end plate (50, 52) engagement surfaces (36), where fitted, wherein each biasing member urges the engagement surfaces (36) of a respective said pair apart.
